# EUROPÄISCHE PATENTSCHRIFT

(11) **EP 3 590 316 B1**
(45) Veröffentlichungstag und Bekanntmachung des Hinweises auf die Patenterteilung: **26.04.2023**
(21) Anmeldenummer: 18181126.6
(22) Anmeldetag: 02.07.2018
(51) Int. Cl.: A01B 29/04

(54) **VORRICHTUNG ZUR BODENBEARBEITUNG**
DEVICE FOR WORKING THE SOIL
DISPOSITIF DE TRAVAIL DE LA TERRE

(43) Veröffentlichungstag der Anmeldung: 08.01.2020
(73) Patentinhaber: Maschinenfabrik Bermatingen GmbH & Co. KG, 88697 Bermatingen (DE)
(72) Erfinder: LEHMANN, Franz, 88677 Markdorf (DE)
(74) Vertreter: Christ, Niko

(56) Entgegenhaltungen:
- EP-A1- 3 036 982
- EP-A2- 0 305 056
- DE-C- 540 228
- GB-A- 1 254 497
- US-A- 345 903
- US-A- 2 700 926
- US-A- 4 326 591

## Beschreibung

Die Erfindung bezieht sich auf eine Vorrichtung zur Bodenbearbeitung nach dem Oberbegriff des Patentanspruches 1.

Derartige Vorrichtungen werden seit Jahrzehnten dazu eingesetzt, die in einem Untergrund vorhandenen Pflanzenreste zu zerkleinern, so dass diese möglichst rasch ihre Nährstoffe in den Untergrund abgeben. Insbesondere in abgeernteten Maisfeldern befinden sich Wurzeln und andere Bestandteile der Maispflanze, in die Ungeziefer eindringt und in diesen überwintern kann, wenn die vorhandenen Pflanzenreste eine entsprechenden Raum für einen geschichteten Unterschlupf bieten. Sobald jedoch die Pflanzenreste zerkleinert sind, fehlt dem Ungeziefer ein entsprechender Raum, um sich vor den Witterungseinflüssen des Winters zu schützen, so dass das Ungeziefer während der kalten Jahreszeit abstirbt und sich im Frühjahr eine möglichst geringe Population der Ungeziefer zur erneuten Vermehrung bereit stellt.

Durch US 345,903 ist eine Vorrichtung zur Feldbearbeitung bekannt geworden, auf dem eine Vielzahl von Kornpflanzen angebaut sind, zwischen denen Unkraut wächst. Mittels der dort beschriebenen Vorrichtung soll das Unkraut aus dem Untergrund herausgerissen werden, um dieses am weiteren Wachstum zu hindern.

Die US 2,700,926 beschreibt eine Vorrichtung zur Pflege von Grasflächen, beispielsweise auf einem Golfplatz. Um das hochwertige Gras zu pflegen und dieses zu einem vermehrten Wachstum zu führen, sollen mittels der dort beschriebenen Vorrichtung Vertiefungen in den Untergrund eingedrückt werden, sodass in diesen nachfolgend Dünger oder Grassamen eingebracht werden können.

Aus US 4,326,591 ist eine ähnliche Vorrichtung zum Eindrücken von Vertiefungen in das Erdreich zu entnehmen. Üblicherweise stehen dafür radial an einer rotierenden Walze befestigte Bolzen zur Verfügung. Die Walze liegt auf dem Untergrund auf und überfährt diesen. Die jeweils dem Untergrund zugewandten Bolzen verdichten das Erdreich, sodass in dem Untergrund eine Vielzahl von Rillen oder Löchern entstehen, in die nachfolgend Düngemittel, Grassamen oder dergleichen eingebracht werden können. Oftmals dienen solche Eindrücke in Boden auch schlicht als Belüftung für die dort wachsenden Pflanzen.

In DE 540 228 und EP 0 305 056 A2 ist eine gleichartige Vorrichtung zur Verdichtung von Erdreich mit andersartigen konstruktiven Maßnahmen zur Halterung der erforderlichen Bolzen oder Schaufeln, die radial von einer Walze abstehen, beschrieben.

In GB 1 254 497 A und EP 3 036 982 A1 sind weitere gleichartige Vorrichtungen beschrieben.

Die bekannten Vorrichtungen bestehen üblicherweise aus einem Rahmengestell, das an einer Zugmaschine, beispielsweise einem Traktor oder Unimog, angehängt werden kann. An dem Rahmengestell ist mindestens eine Walze drehbar gelagert, die quer zur Fahrtrichtung der Zugmaschine bzw. des Rahmengestells ausgerichtet ist. An dem Außenumfang der jeweiligen Walze sind eine Vielzahl von plattenförmigen Schneidwerkzeugen angeschweißt oder angeschraubt, die radial von der Walze abstehen und sich über die gesamte Länge der Walze erstrecken. Die Schneidwerkzeuge weisen einen plattenförmigen Querschnitt auf und das jeweilige freie Ende der Schneidwerkzeuge dringt in den Untergrund ein, wodurch die sich dort befindenden Pflanzenreste gemeinsam mit dem Erdreich des Untergrundes zerkleinert und vermischt werden. Die Eindringtiefe der Schneidwerkzeuge beträgt üblicherweise 3 bis 4 cm und das Eindringen der Schneidwerkzeuge erfolgt durch die Eigenegewichtskraft der Walze bzw. des Rahmengestells. Aufgrund der vorhandenen Fahrgeschwindigkeit des Rahmengestells wird die Walze in Rotation versetzt, so dass jedes der Schneidwerkzeuge in einem vorgegebenen Zeitabschnitt in den Untergrund eindringt.

Bei diesen bekannten Vorrichtungen hat sich nachteiliger Weise herausgestellt, dass sich zwischen zwei benachbarten Schneidwerkzeugen das Erdreich des Untergrundes ablagert und festsetzt, denn oftmals ist das Erdreich schlammig oder lehmig, so dass dieses eine hohe Klebeeigenschaft aufweist. Wenn sich jedoch zwischen den Schneidwerkzeugen eine entsprechende Masse von Erdreich ablagert bzw. festsetzt, führt dies dazu, dass die eigene Gewichtskraft der Walze schwerer wird, wodurch sich deren Rotation verringert und sogar ein vollständiger Funktionsausfall eintreten kann, wenn nämlich das abgelagerte Erdreich bis zur freien Stirnseite der jeweiligen Schneidwerkzeuge vorhanden ist. Sobald nämlich das Erdreich die Schneidwerkzeuge vollständig abdeckt, verlieren diese ihre gewünschte Funktion in das Erdreich einzudringen und die dort vorhandenen Pflanzenreste zu zerkleinern, vollständig verlieren.

Darüber hinaus sind die Schneidwerkzeuge als Verschleißteile anzusehen, so dass die Schneidwerkzeuge oftmals mittels einer Vielzahl von Schrauben an die Walze zu befestigen sind, um diese austauschen bzw. auswechseln zu können. Wenn jedoch die Schneidwerkzeuge mit mehr als 200 Schrauben an der Walze zu befestigen sind, um die auftretenden Kräfte, die über das Schneidwerkzeuge an die Walze weiterzuleiten sind, vorzusehen sind, ist zum einen die Montage sowie Demontage der jeweiligen Schneidwerkzeuge zeitaufwendig und die Kosten für die notwendigen Schrauben zum anderen sind erheblich.

Es ist daher Aufgabe der Erfindung, eine Vorrichtung der eingangs genannten Gattung zur Verfügung zu stellen, durch die zum einen die Ablagerungen von Erdreich in den Zwischenräumen von zwei benachbarten Schneidwerkzeugen verhindert ist und durch die zum anderen der Ein- und Ausbau der Schneidwerkzeuge an der Walze kostengünstig und zeitsparend bewerkstelligt werden kann.

Diese Aufgabe ist erfindungsgemäß durch die Merkmale des kennzeichnen Teils von Patentanspruch 1 gelöst.

Weitere vorteilhafte Weiterbildungen der Erfindung ergeben sich aus den Unteransprüchen.

Dadurch, dass die Länge der jeweiligen Schneidwerkzeuge etwa halb so groß bemessen ist wie die Länge der Walze und dass zwei der Schneidwerkzeuge, die sich über die gesamte Länge der Walze erstrecken, fluchtend zueinander verlaufen, dass die derart gebildeten Paare der Schneidwerkzeuge in der Mitte der Walze mittels Schrauben an dieser befestigt sind und dass zwischen den jeweiligen Paaren von Schneidwerkzeuge ein Luftspalt vorhanden ist, derart, dass sich jedes der Paare von Schneidwerkzeugen gegenseitig als Anschlag in der Mitte der Walze abstützen, ist erreicht, dass sich die jeweiligen Schneidwerkzeuge sowohl beim Eindringen als auch beim Herausziehen aus dem Untergrund relativ zu der Walze bewegen, wodurch ein Herausschütteln des Erdreiches in den Zwischenräumen der Schneidwerkzeuge erreicht ist.

Da nämlich die Schneidwerkzeuge mit einem vorgegebenen Spiel in der Aufnahmeöffnung der Walze gehalten sind und da die zwei benachbarten Anschlagsbacken einen vorgegebenen Öffnungswinkel aufweisen, der in etwa dem vorhandenen Spiel der Schneidwerkzeuge in der Aufnahmeöffnung entspricht, können die Schneidwerkzeuge zwischen zwei benachbarten Anschlagsbacken hin und her wackeln. Sobald eines der Schneidwerkzeuge auf einen der Anschlagsbacken auftrifft, dient der jeweilige Anschlagsbacken als Begrenzung, so dass die durch die Rotation der Walze entstehenden Kräfte von der jeweiligen Anschlagsbacke abgestützt sind. Durch die entstehenden Bewegungen der Schneidwerkzeuge ist demnach verhindert, dass sich zwischen diesem Erdreich des Untergrundes ablagern kann. Vielmehr wird das Erdreich aus den Zwischenräumen der Schneidwerkzeuge durch deren entsprechenden Bewegungen permanent herausgeschüttelt.

Darüber hinaus kann jedes der Schneidwerkzeuge seitlich in die jeweilige Aufnahmeöffnung eingeführt werden, so dass eine einmalige Befestigung durch eine Schweißnaht oder für die Auswechslung des Schneidwerkzeuges nach dem Stand der Technik bekannte Schrauben-Verbindungen entfallen können. Vielmehr werden die Schneidwerkzeuge derart bemessen, dass diese etwa die Hälfte der Länge der Walze entsprechen, sodass zwei in einer gemeinsamen Ebene verlaufende Schneidwerkzeuge in der Walzenmitte mit jeweils lediglich zwei Schrauben an dieser zu befestigen sind, wodurch ein Herausrutschen der Schneidwerkzeuge an der offenen Stirnseite der Walze verhindert ist. Die Bewegungen der Schneidwerkzeuge in Richtung der Walzenmitte ist dadurch verhindert, dass sich die jeweiligen Schneidwerkzeuge gegenseitig abstützen, so dass ein gemeinsamer Anschlag entsteht. Sollten die Schneidwerkzeuge verschlissen sein, können diese zudem auf schnelle und einfache Weise aus der Aufnahmeöffnung heraus geschoben und durch neue Schneidwerkzeuge ersetzt werden.

In der Zeichnung sind zwei erfindungsgemäße Ausführungsbeispiele dargestellt, die nachfolgend näher erläutert sind. Im Einzelnen zeigt:
- Figur 1: eine Zugmaschine, an der eine Vorrichtung zur Bodenbearbeitung mit einem Rahmengestell und einer Walze angehängt ist, in Seitenansicht,
- Figur 2: die Walze gemäß Figur 1 in einer ersten Ausführungsvariante sowie in vergrößerter Darstellung mit einer über deren Umfang angeordneten Schneidwerkzeugen, im Längsschnitt,
- Figur 3: ein vergrößerter Ausschnitt der Walzenmitte der Walze gemäß Figur 2,
- Figur 4: die Walze gemäß Figur 2 in Seitenansicht,
- Figur 5: ein vergrößerter Ausschnitt der Walze gemäß Figur 4,
- Figur 6: ein vergrößerter perspektivischer Ausschnitt der Walzenmitte gemäß Figur 2,
- Figur 7: die Walze gemäß Figur 1 in einer zweiten Ausführungsvariante, in der eine Vielzahl von Aufnahmeöffnungen eingearbeitet sind, die zwei unterschiedlich groß bemessene Einführ- und Abstützöffnungen aufweisen in Draufsicht,
- Figur 8: ein vergrößerter Ausschnitt der Walze gemäß Figur 7,
- Figur 9: die Walze gemäß Figur 7 in einem Schnitt IX-IX mit eingesetzten Schneidwerkzeugen,
- Figur 10: eine vergrößerte Darstellung der Walze und zwei Schneidwerk zeuge gemäß Figur 9 und
- Figuren 11 und 12: die Walze gemäß Figur 9 im bewegten Zustand und in einer vergrößerten Darstellung der Walze gemäß Figur 10 mit beweglichen Schneidwerkzeugen um einen Verschwenkungswinkel α.

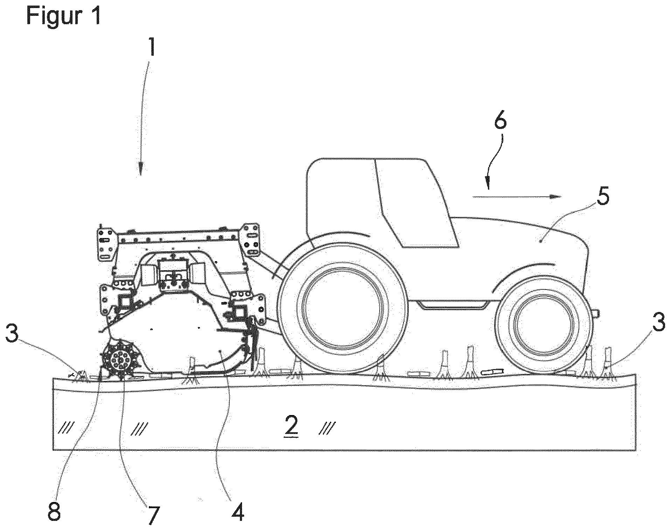

In Figur 1 ist eine Mulch-Vorrichtung 1 schematisch dargestellt, die an einer Zugmaschine 5 angehängt werden kann. Die Mulch-Vorrichtung 1 und die Zugmaschine 5 überfahren einen Untergrund 2 in einer vorgegebenen Fahrtrichtung 6. In dem Untergrund 2 sind eine Vielzahl von Pflanzenresten 3 eingewachsen, die durch die Mulch-Vorrichtung 1 zerkleinert werden sollen, um diese zum einen so rasch als möglich dem Untergrund erneut als Nährstoffe zur Verfügung zu stellen und zum anderen als Unterschlupf für Insekten, insbesondere dem Maiszünsler, dienenden Rückzugsmöglichkeiten während der kalten Jahreszeit nicht zur Verfügung stehen zu können.

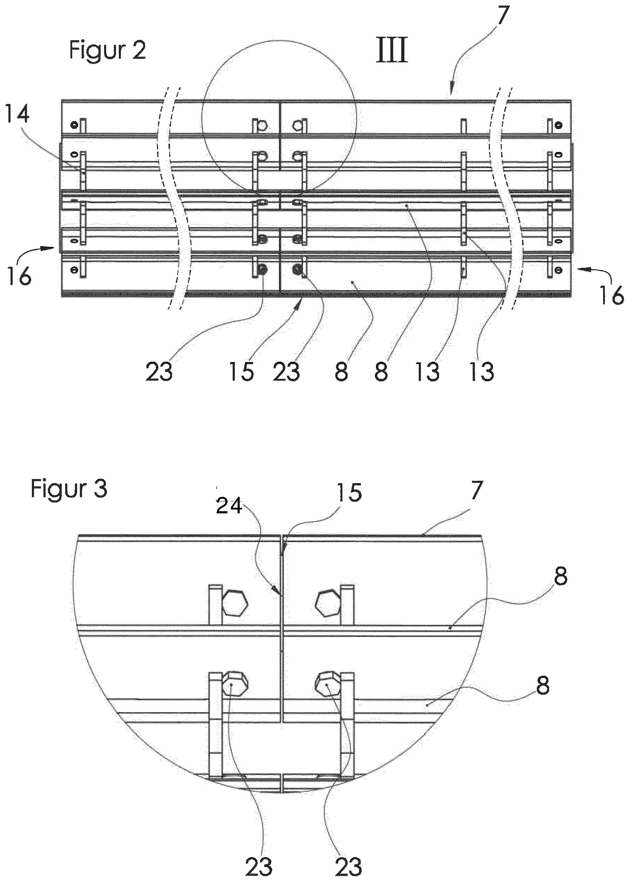

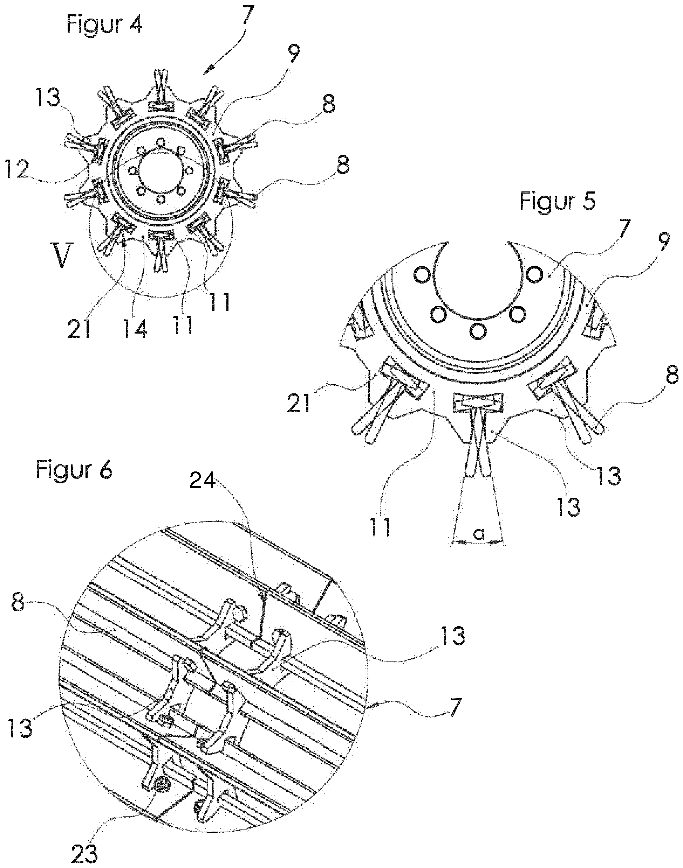

Insbesondere den Figuren 2, 3, 4, 5 sowie 6 ist der konstruktive Aufbau der Mulch-Vorrichtung 1 zu entnehmen. Die Mulch-Vorrichtung 1 besteht im Wesentlichen aus einem Rahmengestell 4, an dem mindestens eine Walze 7 drehbar angebracht ist. Die Walze 7 verläuft quer zur Fahrtrichtung 6 des Rahmengestelles 4, wodurch erreicht ist, dass sich die Walze 7 mit einer durch die Fahrgeschwindigkeit der Zugmaschine 5 vorgegebenen Rotationsgeschwindigkeit über den Untergrund 2 dreht. An der Walze 7 sind mehrere radial von dieser abstehende Schneidwerkzeuge 8 angebracht, die in den Untergrund 2 teilweise eindringen, um die dort vorhandenen Pflanzenreste 3 zu erreichen und diese zu zerkleinern.

Um die jeweilige in Querschnitt plattenförmig ausgestalteten Schneidwerkzeuge 8 an der Walze 7 zu befestigen, ist in der Wand 9 der Walze 7 eine nutenförmige Aufnahmeöffnung 11 eingearbeitet, die sich über die gesamte Länge der Walze 7 erstreckt. An jedem der Schneidwerkzeuge 8 ist ein T-Profil 12 angearbeitet oder vorgesehenen, dessen Außenkontur an die Innenkontur der Aufnahmeöffnung 11 angepasst ist, derart, dass zwischen dem T-Profil 12 des Schneidwerkzeuge 8 und der Innenwand der Aufnahmeöffnung 11 in montiertem Zustand ein vorgegebener Spiel vorhanden ist. Durch das Spiel 21 zwischen dem T-Profil 12 der Schneidwerkzeuge 8 und der Aufnahmeöffnung 11 der Walze 7 kann somit das jeweilige Schneidwerkzeuge 8 sowohl beim Eindringen in den Untergrund 2 als auch beim Herausziehen aus diesem relativ zu der Walze 7 bewegt werden. Aufgrund der Rotation der Walze 7 übt nämlich der Untergrund 2 zunächst eine entgegen der Rotationsrichtung gerichtete Kraft auf das jeweilige Schneidwerkzeuge 8 aus, wodurch dieses entgegen der Rotationsrichtung der Walze 7 gedrückt ist. Sobald das jeweilige Schneidwerkzeug 8 aus dem Untergrund 2 herausgezogen ist, fällt dieses aufgrund der vorhandenen Eigengewichtskraft in die entgegengesetzte Richtung. Folglich entsteht automatisch eine Rotationsbewegung der jeweiligen Schneidwerkzeuge 8 zu der Walze. Durch diese Bewegungen der Schneidwerkzeuge 8 wird Lehm, Schlamm oder sonstiges Erdreich davon abgehalten, sich an der Oberfläche der Walze 7 bzw. in den Zwischenräumen der Schneidwerkzeuge 8 abzulagern und dort festzusetzen.

Um die Bewegungen der Schneidwerkzeuge 8 in einem vorgegebenen Öffnungswinkel α zu begrenzen, sind auf der Oberfläche der Walze 7 eine Vielzahl von Anschlagsbacken 13 vorgesehen, die ringförmig über den Umfang der Walze 7 verteilt sind. Jeder der Ringe der Anschlagsbacken 13 verläuft parallel zueinander. Je einer der Ringe der Anschlagsbacken 13 wird demnach von mehreren der Anschlagsbacken 13 gebildet. Zwei benachbarte Anschlagsbacken 13 jedes Ringes von diesen dient somit als Abstützhilfe für die Schneidwerkzeuge 8, da diese zwischen zwei der benachbarten Anschlagsbacken 13 radial nach außen gerichtet verlaufen. Die Anschlagsbacken 13 sind fest an der Walze 7, beispielsweise mittels einer Schweißnaht angebracht.

Die Schneidwerkzeuge 8 weisen in etwa die Hälfte der Länge der Walze 7 auf, so dass zwei in einer Ebene zueinander verlaufende Schneidwerkzeuge 8 die gesamte Länge der Walze 7 einnehmen. In der Mitte 15 der Walze 7 sind die zueinander benachbarten Schneidwerkzeuge 8 mithilfe von Schrauben 16 an der Walze 7 fixiert, so dass die Schneidwerkzeuge 8 nicht an den offenen Stirnseiten 16 der Walze 7 herausrutschen können. Darüber hinaus stützen sich die zwei benachbarten in einer Ebene verlaufenden Schneidwerkzeuge 8 in der Mitte 15 der Walze 7 gegenseitig ab, da zwischen diesen lediglich ein geringer Luftspalt 24 vorhanden ist. Sobald sich demnach eines oder beide der benachbarten Schneidwerkzeuge 8 aufeinander zu bewegen, wird deren Verrutschen begrenzt.

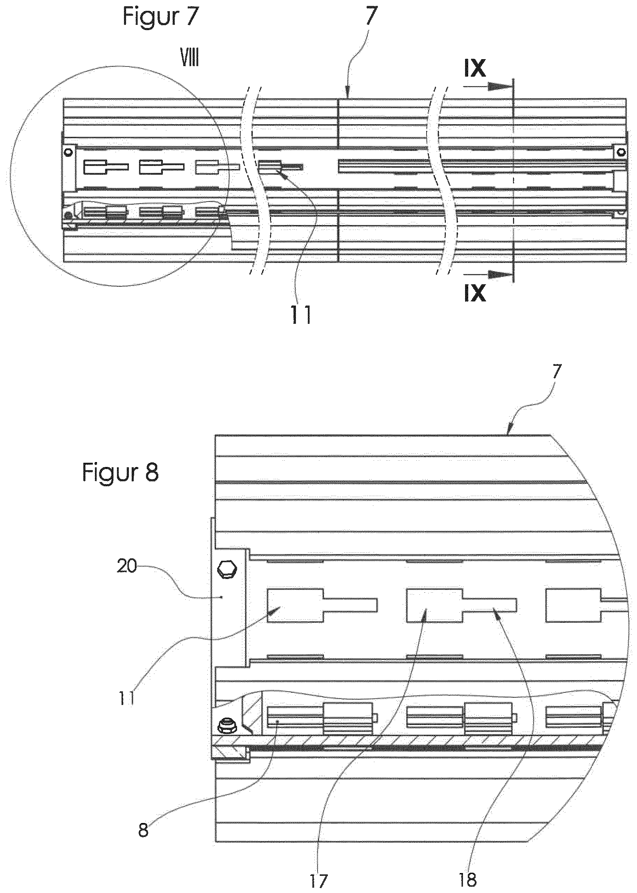

In den Figuren 7, 8, 9, 10, 11 und 12 weist die Walze 7 eine Vielzahl von kastenförmigen Aufnahmeöffnungen 11 auf, die in die Seitenwand der Wand 7 eingearbeitet sind. Dabei sind die Aufnahmeöffnungen 11 in zwei unterschiedlich groß bemessene Einführöffnungen 17 und Abstützöffnungen 18 ausgestaltet. Die Einführöffnungen 17 weisen einen größer bemessenen Bereich auf als die Abstützöffnungen 18, so dass die an den Schneidwerkzeugen 8 angeformten oder angebrachten T-Profile 12 zunächst in die Einführöffnung 17 eingesteckt werden kann. Anschließend wird das jeweilige Schneidwerkzeug 8 in Richtung der Abstützöffnung 18 verschoben, so dass das T-Profil 12 teilweise in die als Hohlwelle ausgestaltete Walze 7 eintaucht und aus der Abstützöffnung 18 in Richtung des Untergrundes 2 radial hinaus ragt.

Um ein Verschieben der in die Abstützöffnungen 18 eingesetzten Schneidwerkzeuge 8 zu verhindern, sind die Schneidwerkzeuge 8 mittels eines Sicherungsringes 20 zu fixieren. Der Sicherungsring 20 wird dabei mittels Schrauben 23 an der Walze 7 angeschraubt und stützt die Schneidwerkzeuge 8 derart ab, dass diese lediglich innerhalb der Abstützöffnung 18 angeordnet sind und folglich nicht in die Einführöffnung 17 gelangen können.

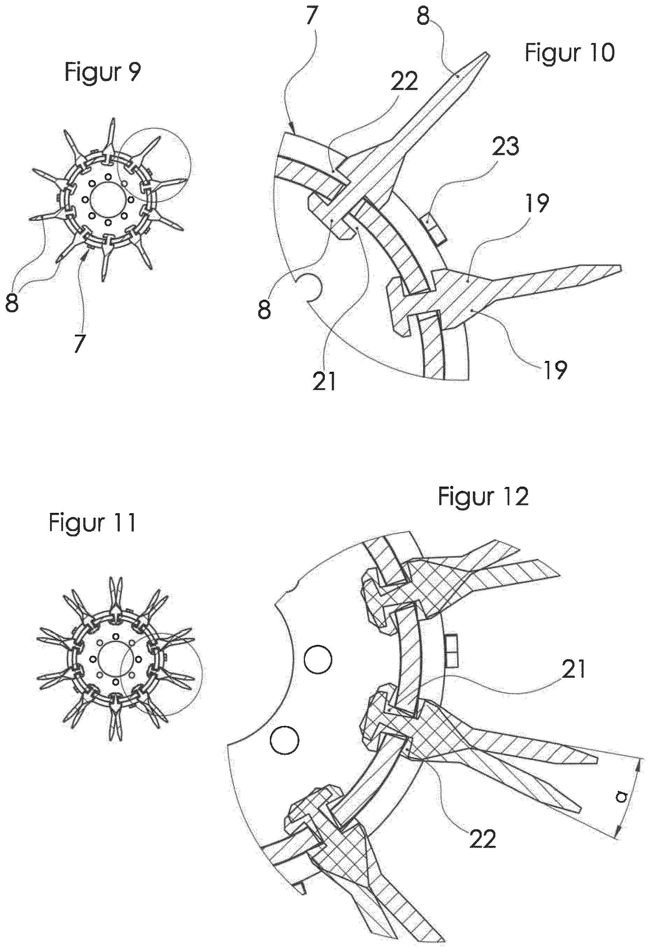

Insbesondere aus den Figuren 11 und 12 ist zu erkennen, dass an dem Übergangsbereich zwischen dem T-Profil 12 und der nach außen abstehenden Schneidklinge der Schneidwerkzeuge 8 seitlich gegenüberliegend zwei Anschläge 19 angeformt sind. Zwischen den beiden Anschlägen 19 und dem im Inneren der Walze 7 verlaufenden T-Profil 12 ist ein entsprechend groß bemessener Luftspalt 21 bzw. 22 vorgesehen. Durch die vorgegebene Größe der beiden Spiele 21 und 22 entsteht ein Verschwenkungswinkel α um den die jeweiligen Schneidwerkzeuge 8 beweglich, also relativ zu der Walze 7, verschwenkbar gehalten sind. Der Spiel 21 entsteht zwischen dem T-Profil 12 und der Innenwand der Walze 7 und der Spiel 22 zwischen der Außenwand der Walze 7 und den Anschlägen 19.

Die Einführöffnung 17 kann auch beispielsweise mittels eines Klemmkeils, einer eingesteckten Platte oder dergleichen verschlossen werden, sobald die Schneidwerkzeuge 8 in die Abstützöffnung 18 eingeschoben sind.

## Patentansprüche

1. Vorrichtung (1) zur Bodenbearbeitung, insbesondere zur Zerkleinerung von Pflanzenresten (3) in einem Untergrund (2), bestehend aus:
- einem Rahmengestell (4), das an einer in eine Fahrtrichtung (6) beweglichen Zugmaschine (5) angehängt ist, und
- mindestens einer an dem Rahmengestell (4) drehbar gelagerten Walze (7), die quer zur Fahrtrichtung (6) des Rahmengestelles (4) verläuft und an der mindestens ein Schneidwerkzeug (8) vorgesehen ist,
- eine in die Walze (7) für jedes der Schneidwerkzeuge (8) eingearbeitete nuten-, schwalbenschwanz- oder kastenförmige Aufnahmeöffnung (11),
- einem an jedem der Schneidwerkzeuge (8) mit dem Querschnitt der Aufnahmeöffnung (11) korrespondierendes und in dieses einsteckbare Profil (12),
wobei
zwischen dem Profil (12) und der Innenwand der Aufnahmeöffnung (11) ein Spiel (21) in deren montierten Zustand vorhanden ist,
und wobei das jeweilige Schneidwerkzeug (8) um einen vorgegebenen Verschwenkungswinkel (α) bewegbar an der Walze (7) abgestützt ist,
**dadurch gekennzeichnet,**
**dass** die Länge der jeweiligen Schneidwerkzeuge (8) etwa halb so groß bemessen ist wie die Länge der Walze (7) und dass zwei der Schneidwerkzeuge (8), die sich über die gesamte Länge der Walze (7) erstrecken, fluchtend zueinander verlaufen, dass die derart gebildeten Paare der Schneidwerkzeuge (8) in der Mitte (15) der Walze (7) mittels Schrauben (23) an dieser befestigt sind und dass zwischen den jeweiligen Paaren von Schneidwerkzeuge (8) ein Luftspalt (24) vorhanden ist, derart, dass sich jedes der Paare von Schneidwerkzeugen (8) gegenseitig als Anschlag in der Mitte (15) der Walze (7) abstützen.

2. Vorrichtung nach Anspruch 1,
**dadurch gekennzeichnet,**
**dass** an der Außenseite der Walze (7) mindestens zwei zueinander beabstandete Anschlagsbacken (13) vorgesehen sind und dass das jeweilige Schneidwerkzeug (8) zwischen zwei der benachbarten Anschlagsbacken (15) radial von der Oberfläche der Walze (7) abstehend herausgeführt ist.

3. Vorrichtung nach Anspruch 2,
**dadurch gekennzeichnet,**
**dass** durch zwei der benachbarten Anschlagsbacken (13) jeweils ein Verschwenkungswinkel (α) vorgegeben ist, zwischen dem das jeweilige Schneidwerkzeug (8) vorschwenkbar gehalten ist.

4. Vorrichtung nach Anspruch 2,
**dadurch gekennzeichnet,**
**dass** die Anschlagsbacken (13) ringförmig über den Umfang der Walze (7) angeordnet sind und dass mindestens zwei solcher ringförmigen Anschlagsbacken (13) über die Länge der Schneidwerkzeuge (8) und in Umfangsrichtung der Walze (7) fluchtend zueinander verlaufend vorgesehen sind.

5. Vorrichtung nach einem der vorgenannten Ansprüche,
**dadurch gekennzeichnet,**
**dass** das Profil (12) der jeweiligen Schneidwerkzeuge (8) in Querschnitt T-förmig ausgestaltet ist.

6. Vorrichtung nach Anspruch 1,
**dadurch gekennzeichnet,**
**dass** die Aufnahmeöffnung (11) zwei unterschiedlich groß bemessene Einfuhr- und Abstützöffnungen (17, 18) aufweist,
**dass** das jeweilige Profil (12) der Schneidwerkzeuge (8) kleiner bemessen ist als die Einführöffnung (17) und dass an dem jeweiligen Schneidwerkzeug (8) zwei gegenüberliegende Anschläge (19) vorgesehen sind, die auf der Außenwand der Walze (7) aufliegen und durch die das Schneidwerkzeug (8) an der Walze (7) verschwenkbar abgestützt ist.

7. Vorrichtung nach Anspruch 6,
**dadurch gekennzeichnet,**
**dass** zwischen dem Profil (12) und der Innenwand der Walze (7) ein Luftspalt (21, 22) und zwischen der Außenwand der Walze (7) und den beiden Anschlägen (19) ein Luftspalt (21, 22) vorgesehen ist, durch deren jeweilige Abmessung des Verschwenkungswinkels (α) vorgesehen ist.

8. Vorrichtung nach Anspruch 6 oder 7,
**dadurch gekennzeichne**t,
dass an der Walze (7) ein oder mehrere Sicherungsringe (20) lösbar befestigt ist bzw. sind, durch die das jeweilige Schneidwerkzeug (8) in der Abstützöffnung gehalten ist.

9. Vorrichtung nach einem der vorgenannten Ansprüche,
**dadurch gekennzeichnet,**
**dass** an beiden Stirnseiten (16) der Walze (7) ein sich ringförmig über den Umfang der Walze (7) erstreckenden Anschlag vorhanden ist, durch den jedes der Schneidewerkzeuge (8) abgestützt ist oder dass die Stirnseite der Walze (7) offen ausgestellt sind.

10. Vorrichtung nach Anspruch 2,
**dadurch gekennzeichnet,**
**dass** die Anschlagsbacken (13) fest mit der Walze (7) verbunden sind.

## Claims

1. A device (1) for working soil, in particular for comminuting plant residues (3) in the ground (2), the device consisting of:
- a frame (4) which is attached to a tractor (5) that can move in a direction of travel (6), and
- at least one roller (7) which is rotatably mounted on the frame (4) and extends transversely to the direction of travel (6) of the frame (4), and on which at least one cutting tool (8) is provided,
- a groove-shaped, dovetail-shaped or box-shaped receiving opening (11) incorporated into the roller (7) for each of the cutting tools (8),
- a profile (12) on each of the cutting tools (8), which profile corresponds to the cross section of the receiving opening (11) and can be inserted therein,
a clearance (21) being present between the profile (12) and the inner wall of the receiving opening (11) in the assembled state thereof,
and the particular cutting tool (8) being supported on the roller (7) so as to be movable by a predefined pivot angle (α), **characterized in that**
the length of the respective cutting tools (8) is approximately half the size of the length of the roller (7) and **in that** two of the cutting tools (8) extending over the entire length of the roller (7) extend in alignment with one another in such a way that the pairs of the cutting tools (8) thus formed are fastened to the roller (7) in the center (15) thereof by means of screws (23), and **in that** an air gap (24) is present between the respective pairs of cutting tools (8), such that each of the pairs of cutting tools (8) supports one another as a stop in the center (15) of the roller (7).

2. The device according to claim 1,
**characterized in that**
at least two stop jaws (13) which are spaced apart from one another are provided on the outside of the roller (7), and **in that** the particular cutting tool (8) is guided so to as project radially out of the surface of the roller (7) between two of the adjacent stop jaws (15).

3. The device according to claim 2,
**characterized in that**
a pivot angle (α) is predefined by two of the adjacent stop jaws (13) in each case, between which angle the particular cutting tool (8) is pivotably held.

4. The device according to claim 2,
**characterized in that**
the stop jaws (13) are arranged annularly over the circumference of the roller (7) and **in that** at least two such annular stop jaws (13) are provided so as to extend in alignment with one another over the length of the cutting tools (8) and in the circumferential direction of the roller (7).

5. The device according to any of the preceding claims,
**characterized in that**
the profile (12) of the respective cutting tools (8) is designed to be T-shaped in cross section.

6. The device according to claim 1,
**characterized in that**
the receiving opening (11) has two insertion and support openings (17, 18) which are differently sized,
**in that** the particular profile (12) of the cutting tools (8) is smaller than the insertion opening (17), and **in that** two opposing stops (19) are provided on the particular cutting tool (8), which stops rest against the outer wall of the roller (7) and by means of which stops the cutting tool (8) is pivotably supported on the roller (7).

7. The device according to claim 6,
**characterized in that**
an air gap (21, 22) is provided between the profile (12) and the inner wall of the roller (7) and an air gap (21, 22) is provided between the outer wall of the roller (7) and the two stops (19), by means of which air gaps the particular sizing of the pivot angle (a) is provided.

8. The device according to either claim 6 or claim 7,
**characterized in that**
one or more securing rings (20) is/are detachably fastened to the roller (7), by means of which securing rings the particular cutting tool (8) is held in the support opening.

9. The device according to any of the preceding claims,
**characterized in that**
a stop extending annularly over the circumference of the roller (7) is present on the two end faces (16) of the roller (7), by means of which stop each of the cutting tools (8) is supported, or **in that** the end face of the roller (7) is open.

10. The device according to claim 2,
**characterized in that**
the stop jaws (13) are rigidly connected to the roller (7).

## Revendications

1. Dispositif (1) permettant le travail du sol, en particulier le broyage de résidus végétaux (3) sur un sol (2), constitué par :
- un châssis de cadre (4) attelé à un tracteur (5) mobile dans un sens de déplacement (6), et
- au moins un rouleau (7) monté rotatif sur le châssis de cadre (4), lequel rouleau s'étend transversalement par rapport au sens de déplacement (6) du châssis de cadre (4) et est prévu sur l'au moins un outil de coupe (8),
- une ouverture de réception (11) en forme de rainure, queue d'aronde ou caisse ménagée dans le rouleau (7) pour chacun des outils de coupe (8),
- un profil (12) correspondant à la section transversale de l'ouverture de réception (11) sur chacun des outils de coupe (8) et pouvant être inséré dans celui-ci,
dans lequel un jeu (21) est prévu entre le profil (12) et la paroi intérieure de l'ouverture de réception (11) lorsqu'ils sont à l'état monté,
et dans lequel l'outil de coupe (8) respectif s'appuie de façon mobile sur le rouleau (7) selon un angle de pivotement (α) prédéfini, **caractérisé en ce**
**que** la longueur des outils de coupe (8) respectifs est environ la moitié de la longueur du rouleau (7) **et en ce que** deux des outils de coupe (8), qui s'étendent sur toute la longueur du rouleau (7), s'étendent en alignement l'un par rapport à l'autre, **en ce que** les paires d'outils de coupe (8) ainsi formées au centre (15) du rouleau (7) sont fixées à celui-ci au moyen de vis (23) **et en ce qu**'un entrefer (24) est prévu entre les paires respectives d'outils de coupe (8), de sorte que toutes les paires d'outils de coupe (8) se supportent mutuellement comme butée au centre (15) du rouleau (7).

2. Dispositif selon la revendication 1,
**caractérisé en ce**
**qu**'au moins deux mâchoires de butée (13) espacées l'une de l'autre sont prévues sur la face extérieure du rouleau (7) **et en ce que** l'outil de coupe (8) respectif entre deux des mâchoires de butée (15) adjacentes sort en saillie de façon radiale depuis la surface du rouleau (7).

3. Dispositif selon la revendication 2,
**caractérisé en ce**
**que** respectivement un angle de pivotement (α) est prédéfini par deux des mâchoires de butée (13) adjacentes, au milieu duquel l'outil de coupe (8) respectif est maintenu de manière à pouvoir pivoter.

4. Dispositif selon la revendication 2,
**caractérisé en ce**
**que** les mâchoires de butée (13) sont disposées de façon circulaire sur la circonférence du rouleau (7) **et en ce qu**'au moins deux desdites mâchoires de butée (13) circulaires sont prévues de manière à s'étendre en alignement les unes par rapport aux autres sur la longueur des outils de coupe (8) et dans une direction circonférentielle du rouleau (7).

5. Dispositif selon l'une des revendications précédentes,
**caractérisé en ce**
**que** le profil (12) des outils de coupe (8) respectifs est réalisé en forme de T en section transversale.

6. Dispositif selon la revendication 1,
**caractérisé en ce**
**que** l'ouverture de réception (11) présente deux ouvertures d'insertion et d'appui (17, 18) de tailles différentes,
**en c**e **que** le profil (12) respectif des outils de coupe (8) est plus petit que l'ouverture d'insertion (17) **et en ce que** deux butées (19) opposées sont prévues sur l'outil de coupe (8) respectif, lesquelles butées reposent sur la paroi extérieure du rouleau (7) et permettent à l'outil de coupe (8) de s'appuyer contre le rouleau (7) de manière à pouvoir pivoter.

7. Dispositif selon la revendication 6,
**caractérisé en ce**
**qu**'un entrefer (21, 22) est prévu entre le profil (12) et la paroi intérieure du rouleau (7) et un entrefer (21, 22) est prévu entre la paroi extérieure du rouleau (7) et les deux butées (19), entrefers dont les dimensions respectives de l'angle de pivotement (α) sont prévues.

8. Dispositif selon la revendication 6 ou 7,
**caractérisé en ce**
**qu**'un ou plusieurs circlips (20) sont fixés de manière amovible au rouleau (7), lesquels permettent de maintenir l'outil de coupe (8) respectif dans l'ouverture d'appui.

9. Dispositif selon l'une des revendications précédentes,
**caractérisé en ce**
**qu**'une butée s'étendant de façon circulaire sur la circonférence du rouleau (7) est prévue sur les deux faces frontales (16) du rouleau (7), laquelle butée sert d'appui pour chacun des outils de coupe (8), **ou en ce que** les faces frontales du rouleau (7) sont exposées de manière ouverte.

10. Dispositif selon la revendication 2,
**caractérisé en ce**
**que** les mâchoires de butée (13) sont reliées de manière solidaire au rouleau (7).
